# EUROPEAN PATENT APPLICATION

(11) **EP 4 442 860 A1**
(43) Date of publication of application: **09.10.2024**
(21) Application number: 23167118.1
(22) Date of filing: 06.04.2023
(51) Int. Cl.: C25B 1/04, C25B 15/02, G06Q 10/04, C01B 3/04

(54) **METHOD FOR USE IN CONTROLLING OPERATION OF A HYDROGEN PRODUCTION PLANT**

(71) Applicant: ABB SCHWEIZ AG, 5400 Baden (CH)
(72) Inventor: GUTERMUTH, Georg, 69115 Heidelberg (DE); BISKOPING, Matthias, 69493 Hirschberg (DE); PRIMAS, Bernhard, 68165 Mannheim (DE); STARK, Katharina, 69469 Weinheim (DE); FOKKEN, Eike, 69214 Eppelheim (DE)
(74) Representative: Maiwald GmbH

(57) **Abstract**

The invention provides computer-implemented method for use in controlling operation of a hydrogen production plant, the method comprising determining a maximum available amount of energy of a predetermined energy category in a current time interval; determining a target minimum amount of the energy of the predetermined energy category to be used for hydrogen production in the current time interval; and determining hydrogen setpoints for the current time interval using the maximum available amount and the target minimum amount as constraints.

## Description

### FIELD OF THE INVENTION

The invention pertains to a computer-implemented method for use in controlling operation of a hydrogen production plant, a system, a computer program product, and a computer-readable medium.

### BACKGROUND

Electrolyzer plants comprise one or more electrolyzer modules. Improving operation of an electrolyzer plant, particularly operating it at a suitable overall operational setpoint, allows for reducing costs incurred by operating the plant. However, plant operation is bound by many factors that make a determination of what is the suitable operational setpoint challenging.

Even more challenging in the context of any production facilities, including hydrogen production plants, is the increasing aim of being conscious of an environmental footprint. Specifically, in this context, a goal might be the use of a specific type of energy or energy mix for producing hydrogen, particularly, use of so-called green energy obtained at least in part by renewable sources.

Such goals bring about difficulties when it comes to plant operation, as aiming to use a certain type of energy may directly collide with the setpoints determined to be suitable for plant operation. As merely one example, renewable energies are volatile, whereas optimized setpoints often favor a behavior with little volatility. Current setpoint determination methods provide unsatisfactory results in this challenging situation.

Thus, it is an object of the present invention to provide a method for use in controlling operation of an electrolyzer plant that allows for determining operational setpoints in more challenging scenarios, for example hydrogen production aiming at using predetermined types of energy, as described above.

### SUMMARY

The object is achieved by the present invention. The invention provides a method, system, computer program product, and computer-readable medium according to the independent claims. Preferred embodiments are laid down in the dependent claims.

The invention provides a computer-implemented method for use in controlling operation of a hydrogen production plant, the method comprising determining a maximum available amount of energy of a predetermined energy category in a current time interval; determining a target minimum amount of the energy of the predetermined energy category (in other words, a desired minimum amount of energy of the predetermined energy category) to be used for hydrogen production in the current time interval; and determining hydrogen setpoints for the current time interval using the maximum available amount and the target minimum amount as constraints (i.e., using the maximum available amount as a constraint and the target minimum amount as a constraint). Particularly, the steps may be carried out for each of a plurality subsequent time intervals.

Optionally, during the current time interval, hydrogen setpoints for upcoming time intervals may also be determined, e.g., in a predictive manner.

Using the method of the present disclosure, it can be ensured that the hydrogen setpoint is determined in such a manner as to take into account criteria concerning the usage of the energy of the predetermined category.

As an example, it may be a goal to not use more energy than the available amount of energy of the predetermined energy category. For example, it could be a goal to not use energy that is not green energy. The method of the present disclosure allows to take this into account in determining the setpoint. As another example, a target minimum amount of usage of energy of the predetermined energy category may be a goal. For example, energy might lose its categorization as being energy of the predetermined category after some time. As such, a target minimum amount of usage of energy of the predetermined energy category may aim at reducing waste of energy of said category due to expiry.

Moreover, by using the above amounts as (soft or hard) constraints, the set points may be optimized towards goals like low volatility or the like while also taking into account the amounts. Additionally, easy adjustments of constraints can be made, e.g., when criteria for the predetermined energy category change.

As an example, energy of the predetermined energy category may be green energy. Energy might be categorized as green energy when one or more criteria are met, for example, when the energy is obtained from renewable sources, used within a given amount of time after energy production (time criteria), is used within a given region, or the like. Especially time criteria are a challenge in the context of hydrogen production, as the energy supply might be very volatile and might not necessarily match the hydrogen demand or the production capacity. The method of the present application is particularly suitable for addressing this challenge.

The maximum amount of available energy of the predetermined energy category is referred to as Pmax herein. Pmax may be a sum of newly received and remaining energy of the predetermined energy category (e.g., remaining after past consumption and deduction of an expired amount of energy of the predetermined energy category, i.e., energy that expired due to time criteria).

The target minimum amount of energy of the predetermined energy category is referred to as Pmin herein. Pmin may, for example, be determined based on a time criteria so as to avoid expiry of energy of the predetermined energy category, i.e., loss of energy of the predetermined energy category.

The length of the time interval may be freely selected. As an example, the concrete application or scenario at hand may suggest a time interval, e.g. relating to the execution on digital controllers or relating to trading time-windows. Typical time intervals may be in the order of minutes to hours, for example. One specific, yet non-limiting example, is a time interval of 15 minutes. However, the present disclosure is not limited to a specific time interval.

The method of the present disclosure may comprise, for a plurality of time intervals, determining Pmin and Pmax for the respective interval. This may be referred to herein as tracking of energy of the predetermined energy (or, in short, tracking). Optionally, the tracking may involve determining the amount of energy of the predetermined energy category that remains from the preceding time interval and/or determining the amount of energy of the predetermined energy category that is supplied in the time interval and/or determining the amount of energy of the predetermined energy that expired or is about to expire. The tracking may also comprise determining, for each time interval, the amount of energy needed during the time interval (energy demand) and/or the amount of energy actually used during the time interval.

The hydrogen production plant may also be referred to as a hydrogen plant or as an electrolyzer plant.

The hydrogen production plant may comprise a plurality of electrolyzer modules. Each of the electrolyzer modules may comprise a plurality of stacks. Each stack may comprise a plurality of cells. An electrolyzer module may comprise, in addition to one or more stacks, other components, e.g., separator tanks, cooling units, pumps, a rectifier and/or a filter.

In the present disclosure, unless specified otherwise, the terms energy and power are used interchangeably.

The present invention allows for coordinated control of electrolyzer modules taking into account and leveraging flexibilities in requirements or criteria, e.g., for green energy/green hydrogen categorization, to optimize overall plant operation, particularly production performance.

This may be applied, for example, to green hydrogen production using green energy where time criteria between energy production and consumption and potential other criteria are applicable. Potentially, the method may leverage exception-criteria. That is, energy (e.g., from the grid) that per se does not meet the criteria for green energy may nonetheless be categorized as green energy based on the exception criteria.

The method of the present disclosure allows for maximizing the produced amount of green hydrogen by minimizing wasted green energy. The method also allows for optimized asset sizing, for example due to optimized usage of assets like electricity and hydrogen storage, the production plant, and a grid-limit. Thereby, smaller asset sizes and reduced CAPEX during the planning phase may be enabled. This may also reduce LCOH (levelized cost of hydrogen) and payback time.

The present disclosure provides a method that enables the tracking of currently available energy of the predetermined category (categorized by means of defined criteria), like green energy, and that can be incorporated into an existing energy management method (e.g., optimization method) to extend an existing model in an energy management system. As an example, the extended model can maximize the benefit of the hydrogen production within the constraints given by the criteria (e.g., "when to use the energy within the next hour" or "which energy source to buy from").

The extended model may be parametrizable. For example, criteria may be modelled in such a manner that changes in the criteria can be implemented in the model by parameter changes. Thus the extended model may be adaptable to changing criteria change, such as due to changed regulations.

The extended model can be used to optimize against different goals, e.g., "power peak minimization" or "maximization of the time when the hydrogen demand is fulfilled".

The extended model can, in contrast to a conventional control algorithm, optimize several objectives simultaneously.

Specifically, as an example, unused/remaining available of the energy of the predetermined category might be incorporated into an optimization problem. The incorporation allows for optimizing for different goals.

The method of the present disclosure allows for maximizing the usage of energy of the predetermined category, as it takes into account the maximum available energy of the predetermined category (e.g. in each time interval).

The method of the present disclosure may comprise tracking energy of the predetermined category, e.g. green energy, that is available at each point in the decision making and take into account information obtained by the tracking when optimizing hydrogen plant operation, for example, as soft and/or hard boundary conditions of an optimized of an energy management system. Such an optimizer may, for example, comprise an optimization algorithm based on forward looking time series.

The method may make use of regulatory definitions of energy of the predetermined category, e.g. green energy, or definition of green hydrogen to derive therefrom criteria for characterizing energy or hydrogen automatically. The method may also make use of market data, particularly energy price for grid energy. The energy price for grid energy, which is generally an energy mix may, in some cases, be a good indicator or approximation for the composition of the energy. For example, the price may be a good indicator for the share of energy from renewable sources. According to the present disclosure, composition of the grid energy, for which the price of the grid energy may be used as an indicator, may be one of the criteria for characterizing energy as energy of the predetermined category. For example, where based on said criteria, grid energy may be characterized as energy of the predetermined category, e.g. green energy, in spite of not meeting other criteria for energy of the predetermined category, such as timing criteria, which will be explained in more detail below.

The hydrogen setpoint of the hydrogen production plant determines the hydrogen output of the hydrogen production plant. The hydrogen setpoint of the hydrogen production plant will depend at least on hydrogen setpoints of the electrolyzer modules and, accordingly, the power setpoints at which the electrolyzer modules are operated. Accordingly, the hydrogen setpoint of the hydrogen production plant is correlated with the consumed power.

According to the present disclosure, categorization of energy into the predetermined energy category may be based on one or more criteria comprising at least one of time criteria, local criteria, additivity criteria.

Time criteria may specify a time period starting with or comprising a time of production of the energy, wherein the energy is only categorized as energy of the predetermined energy category if consumed within said time period and otherwise expires, particularly wherein consuming energy comprises producing hydrogen using the energy and or storing the energy for later use in producing hydrogen. The time period may be an hour, a day, a month, or even a year, or have any other length. For example, energy may have to be consumed within an hour from the time of production or within the same full hour in which the production occurred (hour-by-hour).

Local criteria may specify a region, wherein the energy is only categorized as energy of the predetermined energy category if consumed within said region.

Additivity criteria may specify that energy is only categorized as energy of the predetermined energy category if its energy production facility was created for the purpose of hydrogen production.

According to the present disclosure the energy of the predetermined energy category may be green energy, pink energy, or a predetermined mix of energy types.

As an example, green hydrogen may be produced using green energy. Green energy may be energy meeting certain criteria, which may include that it is produced from renewable sources and meets one or more of the criteria outlined above, particularly time criteria.

Categorization of energy as energy of the predetermined energy category may be based on exception criteria, wherein exception criteria allow for energy not meeting other mandatory criteria to (exceptionally) be categorized as energy of the predetermined energy category. For example, exception criteria may comprise criteria associated with composition of the grid energy, e.g. derivable from the grid energy price. If, e.g. based on a predefined indicator like the energy price or another suitable indicator, it is determined that the composition of the grid energy is considered as comprising a sufficient amount of energy of the predetermined energy category, then the grid energy may be categorized as energy of the predetermined energy category

For example, such an exception may allow for making use of grid power, which might otherwise not be considered green energy, by exceptionally categorizing it as green energy. This allows for mitigating potential lack of renewable energy from volatile sources. This concept may be referred to as "green grid power".

An advantage of the use of exception criteria is that it allows for better usage of available energy and reducing strains on the grid and/or the hydrogen production plant.

According to the present disclosure, determining the hydrogen setpoints may comprise using a model that models hydrogen plant operation, the model taking into account (the) criteria for categorization of energy as energy of the predetermined energy category.

As an example, the criteria may also be modelled and incorporated in a model that does not take such criteria into account. Alternatively, an operational model that does not take such criteria into account may be modified to incorporate the criteria.

An advantage of using a model as described above is that such modelling allows for easy adaption to changing criteria, e.g., adaption of parameters.

According to the present disclosure, determining the hydrogen setpoints may comprise an optimization and/or a rule-based determination, respectively directed at achieving one or more primary goals and constrained by the maximum available amount and the target minimum amount.

As an example, an optimization may optimize for goals that are not associated with the above-described criteria for categorizing energy. Instead, said criteria may be taken into account in the form of hard or soft constraints in the optimization. This may similarly apply to a rule-based determination, for example by applying a heuristic taking into account said criteria for categorizing energy. A heuristic may, for example, prioritize use of older energy, e.g., energy close to expiry based on time criteria.

According to the present disclosure, the primary goals may include at least one of: minimal hydrogen production volatility; minimal production peaks; minimal production schedule deviation; minimal hydrogen storage requirements; minimal power storage requirements; minimal degradation of one or more hydrogen plant components.

According to the present disclosure, determining the hydrogen setpoints may comprise a prioritization of using older energy over using newer energy. Thus, where time criteria are applied for categorizing energy as being energy of the predetermined category, expiry of the energy of the predetermined category can be reduced or avoided.

According to the present disclosure, determining the hydrogen setpoints may take into account available hydrogen storage capacity and/or available energy storage capacity.

As an example, it may be taken into account, where time criteria apply, i.e., where energy has to be consumed within a certain time to still be categorized as the predetermined energy category, that consuming the energy may also include storing the energy. Thus, storage of energy, particularly available storage capacity, may be taken into account for determining the hydrogen setpoint.

As an example, when it comes to electrical storage, during times when green electricity supply is high, excess electrical energy may be stored, e.g., in a battery energy storage system (BESS) to be used, when green, e.g. renewable, energy supply is low. Criteria for categorizing energy as green energy may allow for energy that is stored within a predetermined time (e.g. an hour) to permanently keep the categorization as green energy (i.e., a "green" label maybe permanently applied to the energy).

Thus, burdens on the optimization in terms of time criteria that require timely use of energy may be reduced and a loss/expiry of energy of the predetermined energy category can be avoided.

As another example, in order to consume energy in a timely manner, an excess amount of hydrogen as compared to the hydrogen demand may be produced and stored depending on available hydrogen storage. This may be taken into account when determining the hydrogen setpoint.

Similarly to the electrical storage, this also reduces burdens in terms of the timing criteria.

For example, hydrogen made from excess green energy may be stored depending on available hydrogen storage capacity.

As an example, when it comes to hydrogen storage, where production capacity can cope with excess green energy (relative to the hydrogen demand and corresponding energy demand), excess (green) hydrogen may be stored, e.g., in a tank. The stored hydrogen may permanently keep the categorization as green hydrogen ("green" label).

Including one or both of energy and hydrogen storage in the optimization model (which represents a plant having said energy and/or hydrogen storage) gives additional degrees of freedom to optimize fulfillment of the optimization goal, e.g. maximum smoothness or maximum time of production fulfilling demand.

According to the present disclosure, the maximum available energy of the predetermined energy category may be determined for a current time slot and may comprise left-over energy of the predetermined energy category from one or more preceding time slots and received energy of the predetermined energy category.

According to the present disclosure, the target minimum amount of energy of the predetermined energy category may be determined to minimize expiration of energy of the predetermined energy category due to (the) time criteria specifying a time period starting with or comprising a time of production of the energy, wherein the energy may only be categorized as energy of the predetermined energy category if consumed within said time period and otherwise expires.

According to the present disclosure, the method may comprise tracking availability and upcoming expiry of energy of the predetermined energy category, particularly based on the criteria outlined above, particularly the time criteria, and taking into account the result of the tracking for determining the hydrogen setpoints.

Tracking of energy of the predetermined energy category as described in the foregoing may be employed with different algorithms that might be used for determining hydrogen setpoints, such as heuristic or rule-based algorithms and optimization-based algorithms. For heuristic algorithms, decisions are made based on a set of rules. The set of rules may include one or more rules that prioritize usage of energy of the predetermined category close to expiry. In accordance with this, always using the oldest remaining green energy may be a heuristic used for determining how current demand is met. For optimization-based algorithms, optimization is usually constrained by a set of constraints. The set of constraints may include one or more constraints, which may be hard or soft constraints, that logically model the criteria for green energy and/or green hydrogen.

According to the present disclosure, the method may comprise logging, for the operation of the hydrogen production plant, the use of energy of the predetermined energy category, particularly so as to allow for determining (the) one or more criteria on which categorization of energy as energy of the predetermined energy category was based. This may, for example, be of use for auditing purposes, e.g., to provide evidence for operating within a regulatory framework.

The method of the present disclosure may comprise logging any data input into and output from the determination of the hydrogen setpoint, e.g., the optimization, and storing it. This may allow for proper documentation of hydrogen production from energy of a predetermined energy category (e.g., green hydrogen), e.g., to meet documentation requirements and/or for auditing purposes, e.g., to provide evidence for operating within a regulatory framework.

The criteria for the categorization of energy of a predetermined energy category may be adjusted towards criteria associated with regulatory requirements to be met (e.g., for energy to be considered green energy), for example by adjusting values of the criteria or the like. Where criteria for tracking energy of a predetermined energy category are based on regulatory criteria. Accordingly, compliance with regulations can be easily established even with changing/time-varying regulations, as it is not required to change any hard-coded rules in the control code. However, from a technical point of view, it does not make a difference whether the criteria are adjusted towards regulatory requirements, as the technical challenges and effects do not depend on them.

In other words, the present invention allows for capturing, setting up, and documenting all time-varying criteria (e.g. associated with regulations) in one tool, e.g., the energy management system. Thus, the tool may, among others, be employed to prove compliance with the regulations and act as a certification instance and data storage for later auditing.

The invention also provides a system comprising a processing system configured to carry out any of the methods of the present disclosure.

The system may further comprise one or more electrolyzer modules of an electrolyzer plant, the processing system configured to control operation of the one or more electrolyzer modules to operate at the determined target module setpoints. The system may be or comprise the electrolyzer plant.

The system may comprise a hydrogen storage system and/or an energy storage system, such as BESS (battery electric storage system).

The invention also provides a computer program product comprising instructions which, when the program is executed by a computer, cause the computer to carry out any of the methods of the present disclosure.

The invention also provides a computer-readable medium comprising instructions which, when executed by a computer, cause the computer to carry out any of the methods of the present disclosure.

The features and advantages outlined above in the context of the method similarly apply to the system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
Figures 1a, 1b illustrate schematic representations of an electrolyzer plant;
Figure 2 is a flowchart illustrating a method according to the present disclosure;
Figure 3 is a flowchart illustrating a method according to the present disclosure;
Figure 4 schematically illustrates a method according to the present disclosure;
Figure 5 schematically illustrates hydrogen production curves of known methods;
Figure 6 schematically illustrates hydrogen production curves according to the present disclosure;
Figure 7 schematically illustrates hydrogen production curves according to the present disclosure;
Figure 8 schematically illustrates hydrogen production curves according to the present disclosure.

### DETAILED DESCRIPTION

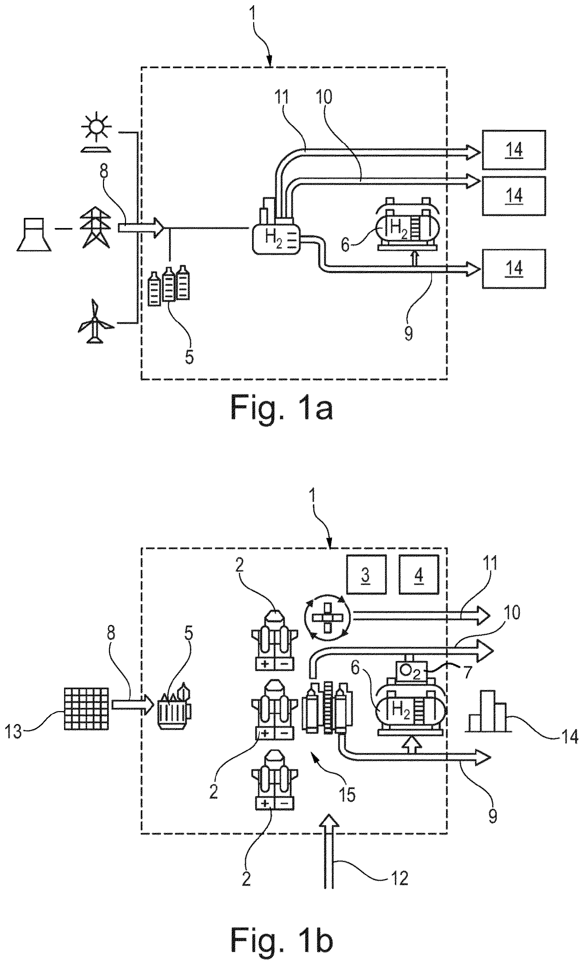

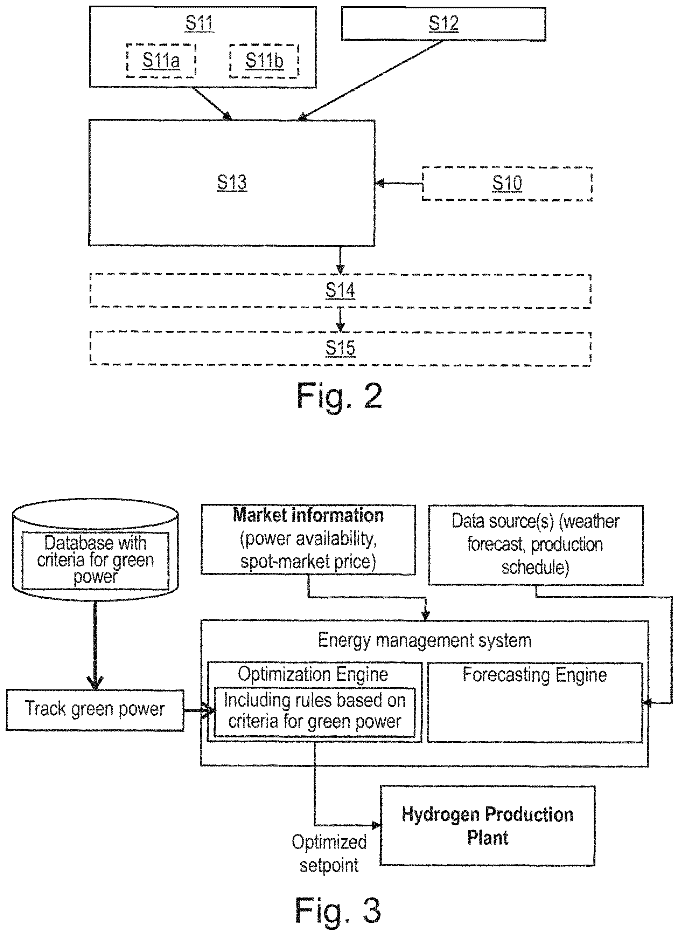

The system 1 of the present disclosure comprises a processing system 3 (also referred to as computing system) configured to carry out a method according to the present disclosure, for example a method as outlined in the context of one of Figures 2 to 4. Optionally, the system may also be or comprise an electrolyzer plant comprising a plurality of electrolyzer modules 2. Such a system is illustrated in Figures 1a and 1b.

The system in Figures 1a and 1b is shown as comprising optional monitoring devices 4, optional electricity storage 5, optional hydrogen storage 6 and optional oxygen storage 7. Furthermore, arrow 8 indicates electricity input to the electrolyzer plant, arrow 9 indicates hydrogen output out of the electrolyzer plant, arrow 10 indicates oxygen output out of the electrolyzer plant, arrow 11 indicates heat output out of the plant (or heat input into the plant), and arrow 12 indicates water input into the electrolyzer plant.

Merely for illustration and not part of the system of the present example, an electrical grid 13 and networks 14 into which the hydrogen, oxygen, and heat are fed, are shown.

Moreover, an optional hydrogen and oxygen separator tank 15 is shown.

It is noted that Figure 1a illustrates the plant with fewer details of the individual components of the plant than in Figure 1b merely for illustrating in an exemplary manner that different levels of details may be considered when looking at plant operation.

The method of the present disclosure may be performed in a system as shown in Figures 1a and 1b, the method steps, for example, being carried out by the processing system 3, or any other suitable system, particular a system according to the present disclosure.

Figure 2 is a flowchart illustrating a method according to the present disclosure.

The present disclosure provides computer-implemented method for use in controlling operation of a hydrogen production plant.

The method comprises determining, in step S11, a maximum available amount of energy of a predetermined energy category (e.g., green energy) in a current time interval. The maximum available amount of energy of the predetermined energy category may be used as an input for determining the hydrogen setpoints in step S13 described below.

Determining whether energy is energy of the predetermined energy category may comprise checking whether the energy meets certain criteria including positive criteria and exception criteria allowing for violation of one or more of the positive criteria.

For example, it may be determined in optional step S11a whether new energy of the predetermined energy category is or has been received, referred to as newly-received energy of the predetermined energy category. Alternatively or in addition, it may be determined in optional step S11b whether energy of the predetermined energy category is still available from previous time intervals. This may involve determining whether remaining energy from previous time intervals still meets the criteria for energy of the predetermined energy category, particularly, timing criteria. The maximum available amount of energy of the predetermined energy category may, for example, be the sum of the newly-received energy of the predetermined energy category as determined in step S11a and the energy of the predetermined energy category still available from previous time intervals as determined in step S11b.

In order to carry out the determination, the method may comprise accessing criteria for categorizing energy as energy of the predetermined energy category, matching data related to newly-received energy with the criteria and matching data related to the remaining energy with the criteria.

As an example, for newly-received energy all criteria may be checked, particularly positive criteria and exception criteria. For the remaining energy, optionally only some criteria may be checked, particularly, only the timing criteria. For other criteria, e.g. local criteria, it may be sufficient to check the criteria once when energy is newly received.

The method also comprises determining, in step S12, a target (desirable) minimum amount of energy of the predetermined energy category to be used for hydrogen production in the current time interval. The target minimum amount of energy of the predetermined energy category may be used as an input for determining the hydrogen setpoints in step S13 described below.

For example, it may be determined that at least an amount of energy of the predetermined energy category that will no longer meet timing criteria in the upcoming time interval is the target minimum amount of energy of the predetermined energy category to be used. In other words, the target minimum amount of energy of the predetermined energy category may be selected to avoid a time-related loss of energy of the predetermined energy category due to re-categorization of remaining energy as energy not of the predetermined energy category.

The above steps may be considered as steps for tracking energy of the predetermined energy category. An exemplary tracking method is described further below.

In optional step S10, inputs for determining the hydrogen setpoints may be determined or received, such as optimization goals for hydrogen plant operation and/or optimization constraints for hydrogen plant operation. Other potential inputs may comprise environmental information and/or plant status information and/or weather information and/or market information. Other inputs are conceivable.

The method comprises using, in step S13, determining hydrogen setpoints for the current time interval using the maximum available amount and the target minimum amount as (soft or hard) constraints. As an example, step S13 may comprise performing an optimization for an optimization goal, e.g., input as part of step S10, that yields hydrogen setpoints. The optimization may be based on an operational model modelling the hydrogen plant operation.

Thus, optimization yielding the hydrogen setpoints can be carried out in any desired manner, with any desired optimization goal and constraints, while also taking into account constraints ensuring making proper use of energy of the predetermined energy category.

The optimization may be based, in particular, on a forward-looking time-series, i.e., the optimization may comprise a predictive component.

The above steps may be repeated, for example for each of a plurality of time-slots. It is noted that the remaining energy of the predetermined energy category between time slots may not only be reduced by actual consumption of energy, but may also be reduced by previously energy of the predetermined energy category not meeting the timing criteria anymore, which may be referred to as a loss or expiry of energy of the predetermined energy category.

In optional step S14, control signals configured to operate the hydrogen production plant at the determined hydrogen setpoints may be generated and optionally output.

In optional step S15, a hydrogen production plant may be operated based on the control signals.

The above-described tracking of energy of the predetermined energy category may be employed with different algorithms that might be used for determining hydrogen setpoints, such as heuristic or rule-based algorithms and optimization-based algorithms.

For heuristic algorithms, decisions are made based on a set of rules. The set of rules may include one or more rules that prioritize usage of energy of the predetermined energy category close to expiry. For optimization-based algorithms, optimization is usually constrained by a set of constraints. The set of constraints may include one or more constraints, which may be hard or soft constraints, that logically model the criteria for energy of the predetermined energy category.

Figure 3 is a flowchart illustrating a method according to the present disclosure, wherein a database with criteria for green power is accessed and used as an input to track green power, particularly to track whether incoming power is green and whether remaining power is (still) green. The result of the tracking is input into an energy management system. Moreover, market information like power availability is input into the energy management system.

Additionally, information from other data sources may be provided to the energy management system, for example a weather forecast or a production schedule. Such information may be used when predictively modelling a hydrogen production, as expected demand or available energy may depend on such information. The energy management system may comprise a forecasting engine to process such information.

Based on the tracked green power, the market information, and the additional information, an optimization engine my determine an optimized hydrogen setpoint, which may then be used to control operation of the hydrogen production plant. The determination by the optimization engine includes rules that are based on criteria for green power, particularly in the form of constraints.

### Examples for methods according to the present disclosure

In the following examples, green energy is used as an example energy of the predetermined energy category. However, energy of the predetermined energy category may also be pink energy or an energy mix or any other specific type of energy.

Hydrogen made from green energy is referred to as "green hydrogen". As explained above, production of "green hydrogen" may be a constraint or boundary condition associated with optimizing the operational setpoint of a hydrogen production plant and, in order to optimize for such a goal, there is a need to quantify the environmental footprint or classify production parameters as "green". Criteria for categorizing hydrogen as green hydrogen may include use of green energy, i.e., renewable energy that fulfils different criteria, including, for example, one or more of local criteria, additivity criteria, and timing criteria, e.g., timely use of renewable energy.

One way to do define the criteria in a relatively easy manner is to use regulatory definitions or frameworks to define when hydrogen is considered "green". This type of quantification has the added benefit of also allowing to easily track and report green hydrogen production to the authorities and customers in the context of incentives, benefits, demand for green hydrogen, and the like.

More specific examples of a set of criteria for green hydrogen production are shown below.
(1) Local criteria. Local criteria may comprise criteria concerning where the renewable energy being used for hydrogen production comes from. This may be based on bidding zones, for example, as these bidding zones are already available and provide a suitable way of implementing quantification of local criteria.
(2) Additivity criteria. Additivity criteria may, for example, specify that the renewable power plant providing energy for hydrogen production must have been erected especially for production of green hydrogen. Other potential criteria are the presence or absence of a long-term power-purchase-agreement (PPA).
(3) Time criteria. Time criteria may include, for example, that the energy used for hydrogen production comes from energy production within the same predefined time period, e.g. from the same hour, which is referred so as "hour-by-hour". In this context, optionally, modified storage criteria (3b) may also be applied. That is energy may still comply with the time criteria when stored (rather than immediately used for hydrogen production), within the same predefined time period as defined under (3), e.g., within the hour of production, and used for hydrogen production at an arbitrary later point.

As an example, in order for produced hydrogen to be categorized as green hydrogen, the energy used for the hydrogen production may have to fulfill a defined subset of or all three criteria (1), (2), (3).

An exception may be defined by exception-criteria, for example:
(4) Hydrogen may still be categorized as green hydrogen even if the grid energy does not meet the required ones of criteria (1) to (3), for example in case it is determined that grid energy is likely to comprise a sufficient amount of energy from renewable sources. As explained above, the price for grid energy may be used as a good approximation or indicator, particularly in merit order systems.

Especially timing criteria are, however, a challenge in the context of hydrogen production, as the energy supply might be very volatile and might not necessarily match the hydrogen demand or the production capacity.

It will be understood that the method of the present disclosure allows for addressing this challenge in the context of production of green hydrogen by determining a maximum available amount of green energy in a current time interval and the target/desirable minimum amount of green energy to be used in the current time interval and, inputting said values in the determination of the hydrogen setpoints, for example as (soft or hard) constraints.

The method of the present disclosure may comprise logging any data input into and output from the optimization and storing it. This may allow for proper documentation of green hydrogen production, e.g., for regulatory documentation requirements.

The criteria for the categorization of green hydrogen or green energy may be adjusted towards criteria associated with the regulatory requirements to be met, for example by adjusting values of the criteria or the like. Where criteria for green energy tracking are based on regulatory criteria, compliance with regulations can be easily established even with changing/time-varying regulations, as it is not required to change any hard-coded rules in the control code. However, from a technical point of view, it does not make a difference whether the criteria are adjusted towards regulatory requirements, as the technical challenges and effects do not depend on them.

In other words, the present invention allows for capturing, setting up, and documenting all time-varying criteria (e.g. associated with regulations) in one tool, e.g., the energy management system. Thus, the tool may, among others, be employed to prove compliance with the regulations and act as a certification instance and data storage for later auditing.

The present invention allows for taking into account goals for green hydrogen production as well as other potential goals, such as minimal production volatility to minimize stack degradation, minimal production peaks to minimizes peak power costs, or minimal production schedule deviation to minimize storage requirements.

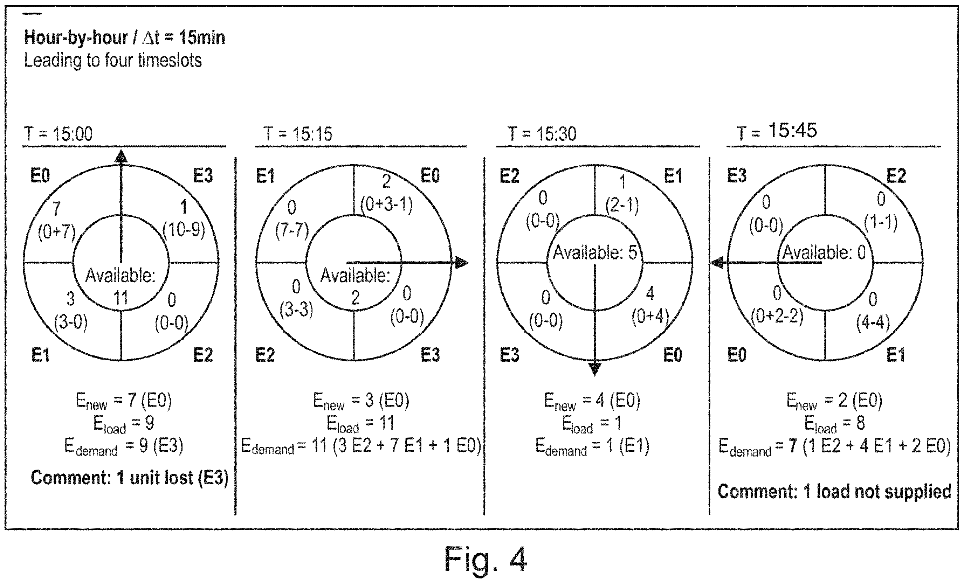

The following examples illustrates how tracking or taking into account the categorization of green hydrogen, e.g., by means of the criteria described above, may be carried out in more detail. Reference is made to Figure 4.

For the sake of explanation and simplicity, the method is described based on an example with concrete numbers. However, of course, the present disclosure is not limited to any of said exemplary numbers.

A time interval Δt is selected. As an example, the concrete application or scenario at hand may suggest a time interval, e.g. relating to the execution on digital controllers or relating to trading time-windows. However, the present disclosure is not limited to a specific time interval.

In the present, non-limiting example, a time interval Δt = 15 min is selected. Merely as an example, this selection might reflect the trading time for energy at spot markets.

The method of the present disclosure may consider, for each time interval, the available energy amount as sum of the new supply of energy and the remaining energy, e.g., remaining after past consumption and lost/expired energy due to time criteria.

An exemplary heuristic to fulfill the current demand, is to always use the "oldest remaining energy". This mechanism is shown in Figure 4 for a one-hour example (hour-by-hour) and 4 time slots of Δt = 15min.

In Figure 4, E0, E1, E2, and E3 each represent an energy slot, each being associated with a time of 15 minutes. From left to right, the energy slots are shown at four different times T. The numbers in the circles indicate available energy at the respective time T in arbitrary units. The arrows indicate that the status shown is at the end of one time slot Δt = 15min, respectively.

In the following, the situation at four times, T=15:00, T=15:15, T=15:30, and T=15:45, as illustrated in the Figure, will be described.

T=15:00: Between 14:45 and 15:00 an additional 7 units have been put in energy slot E0. In the same time interval there was a load of 9 units. In this example, the method attempt, as far as possible, fulfilling the demand from the oldest slot (E3). In the present case, this is possible, as E3 holds 10 units. Thus, E3 is left with 1 unit (10-9). However, at 15:00 the slot E3 is emptied due to the time criteria no longer being met, as it was available for more than one hour, which results in one lost energy unit. The energy units existing in the other energy slots remain untouched as the demand has been met from E3 alone. Accordingly, what will be passed on to the next timestep is an availability of 7 units in E0, 3 units in E1 and 0 unit in E2. E3 does not pass on anything, as explained. Thus, the total availability is 10 units (7+3) and next energy should be consumed from E2 (so as to avoid expiry), which however, in this example, holds 0 units, such that no expiry is imminent.

Now the slots are reordered (rotated) and a new 15-minute time slot starts. The ordering is as follows: Former E0 becomes E1; Former E1 becomes E2; Former E2 becomes E3; Former E3 becomes E0.

T=15:15: Between 15:00 and 15:15 an additional 3 units have been supplied and put in the (new) energy slot E0 (which was formerly E3, as the numbering advanced). The load cannot be supplied with any units of E3 (former E2), as this energy slot was already empty at 15:00. Accordingly, the load of 11 units is supplied from E2 (3), E1 (7) and E0 (1). This leaves 2 units in E0, propagating to the next timestep as availability, with 0 "urgent" units in E2.

Now the slots are reordered (rotated) again as described above and a new 15-minute time slot starts.

T=15:30: Between 15:15 and 15:30 an additional 4 units have been supplied and put in (the new) energy slot E0. E3 and E2 are empty. As load is 1 unit, it can be supplied from energy slot E1 (formerly E0). This leaves 1 unit in E1 and 4 units in E0.

Now the slots are reordered (rotated) again as described above and a new 15-minute time slot starts.

T=15:45: Between 15:30 and 15:45 an additional 2 units have been supplied and put in (the new) energy slot E0. The load is 8 units. All available energy is consumed: 1 unit from E2, 4 units from E1 and 2 units from E0. This leaves one unit un-supplied and a remaining available "green energy" of 0. In this case, only a smaller amount of green hydrogen than indicated by demand can be produced. This may have the consequence of supplying less than the demand of green hydrogen, by meeting the demand using stored green hydrogen previously produced and stored, or using non-green energy for hydrogen production to meet the demand, whereby for this slot the produced hydrogen would not be green hydrogen.

As explained above, tracking of green energy may be employed with different algorithms that might be used for determining hydrogen setpoints, such as heuristic or rule-based algorithms and optimization-based algorithms.

For heuristic / rule-based algorithms, the set of rules just may be extended by a rule that, at any time of decision making, prioritizes the intake of energy if the amount is between the total currently available "legally green" energy *Pₘₐₓ* (the sum 7+3+0+1=11 at 15:00 in the example above) and the green energy *Pₘᵢₙ* assigned to the oldest time slot (energy of 1 in oldest timeslot E3 in the example above). Using less than *Pₘᵢₙ* energy is not desired, as then green energy is wasted. On the contrary, using more than *Pₘₐₓ* energy is also not desired, as in this case the difference in energy to *Pₘₐₓ* corresponds to non-green energy. The concrete implementation of the extension of the rule-based algorithm by a rule that prioritizes the intake of energy to be between *Pₘᵢₙ* and *Pₘₐₓ*, may depend on the respective rule-based algorithm. However, as the rule can be logically formulated, it can also be included by a combination of logical AND, OR, IF/ELSE statements that involve the values *Pₘᵢₙ* and *Pₘₐₓ*.

For algorithms based on mathematical optimization, the situation is similar. In this case, the current set of constraints may be extended by a set of further constraints (hard or soft) that logically model the criteria for green energy/hydrogen, e.g., regulatory constraints. Constraints can be formulated using a combination of logical AND, OR, IF/ELSE statements. It is commonly known that these types of constraints can be modelled using binary and integer variables. Thus, constraints can easily be integrated into a mathematical optimization model that is based on mixed-integer linear programming.

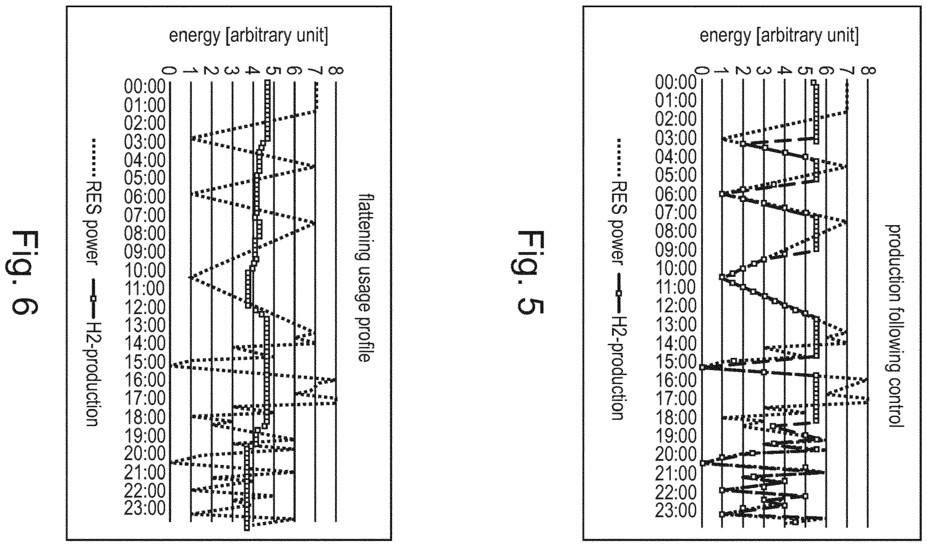

Figure 5 illustrates a hydrogen production curve based on traditional control algorithms making decisions in an online manner, i.e., decisions are made immediately without taking into account (predicted) information of the future.

For such traditional control algorithms, a possible (and potentially best-possible) solution to fulfill the time criteria (in this example "hour-by-hour" criteria) may be the following, where one hour is split into four 15-minute time-slots:
1) Try to use all energy that is produced in the first time-slot: **E_{used1} = E_{Produced1}**. If not all produced energy can be used, calculate the remaining rest >0 to be Eᵣₑₛₜ₁ = E_{produced1} - E_{used1}.
2) Try to use all available energy: **E_{used2} = Eᵣₑₛₜ₁ + E_{produced2}** .If this is not possible use first as much of Eᵣₑₛₜ₁ as possible and then continue with E_{produced2}. Calculate the remaining E_{rest1'} and Eᵣₑₛₜ₂. Both remaining energies are now greater or equal to 0.
3) Try to use all available energy: **E_{used3} = E_{rest1'} + Eᵣₑₛₜ₂ + E_{produced3}** . If this is not possible use first as much of E_{rest1'} as possible and then continue with Eᵣₑₛₜ₂ and E_{produced3}. Calculate the remaining E_{rest1"} and E_{rest2'} and Eᵣₑₛₜ₃ . All remaining energies are greater or equal to 0.
4) Try to use all available energy: **E_{used4} = E_{rest1"} + E_{rest2'} + Eᵣₑₛₜ₃ + E_{produced4}** . If this is not possible use first as much of E_{rest1"} as possible and then continue with E_{rest2',} Eᵣₑₛₜ₃ and E_{produced4}. Calculate the remaining E_{rest1‴} , E_{rest2"} , E_{rest3'} and Eᵣₑₛₜ₄. If E_{rest1‴} is still greater 0 this energy is lost, as it cannot be used anymore in the next time-slot because it was generated more than one hour ago.
5) Continue as above, but always neglecting energy that is "older" than one hour.

In Figure 5, the dotted curve represents the renewable energy production and the dashed curve with white rectangles represents a hydrogen production curve, particularly based on the control algorithm described above. The hydrogen production curve plateaus at maximum capacity, in this example a maximum capacity of 5.5.

Although the maximum possible energy may be used when operating the plant as described above, such an operation will also result in very volatile production profiles with high amount of ramping (which is bad for stack degradation) and potentially unnecessary peaks (which is bad for operational cost).

As an example, this solution would not allow for using less than the maximum possible energy in one time-step to save energy for the next one.

Figure 6 illustrates a hydrogen production curve as obtained by an exemplary method according to the present disclosure (Example 1). Here a "smoothness maximization" goal may be implemented. Specifically, such a goal may aim at minimizing the maximum (peak) power intake, for example to take into account grid limitations. The example in Figure 6 shows the produced electric energy (per 15-minute time-slot) as dotted line. Optimization of the actual power intake to produce hydrogen so as to meet the hour-by-hour criteria is illustrated by the rectangles.

As will be understood from the Figure, a minimal power peak of 4.8 instead of 8.0 (as the power supply curve) or 5.5 (as the result of the control algorithm in Figure 5) is achieved and smoothness is improved. The latter minimizes degradation of the electrolyzer stacks. The difference between the minimum and maximum power intake is only 0.95 (4.65 - 3.7), whereas in the power production it is 8 (8 - 0) and with the control algorithm in Figure 5 it is 5.5 (5.5 - 0).

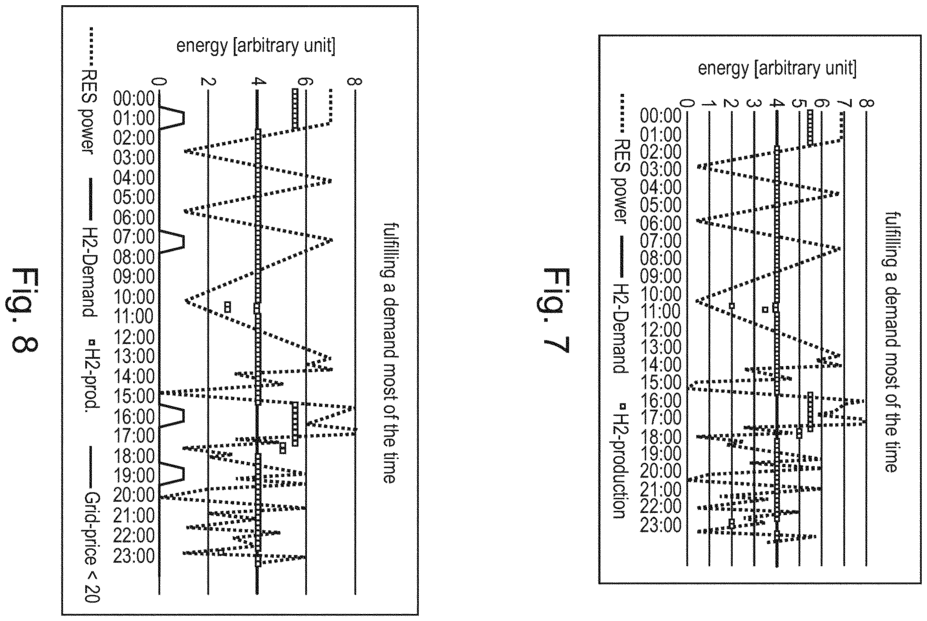

Figure 7 illustrates a hydrogen production curve as obtained by an exemplary method according to the present disclosure (Example 2). Here a "maximum demand fulfillment" goal may be implemented. Specifically, such a goal may aim at fulfilling a certain hydrogen production demand as long as possible. In the example in Figure 7 the hydrogen production demand is shown as a constant thick black line at the value of 4. The power generation is the grey dotted line. Taking hour-by-hour criteria into account, it is possible to fulfill the demand (of 4) for 78% of the time (grey rectangles). The traditional algorithm (Figure 5) would not be able to fulfill this at all, as the limit would have to be larger than 4, to get rid of overproduction. Note that the hydrogen production in this example may also be optimized for peak-power minimization as described in the context of Figure 6.

Additionally, Example 1 and Example 2, unlike the control example of traditional methods as shown in Figure 5, may each be configured to avoid switching off completely and are bound to a band between 2.0 and 5.5.

Example 1 and Example 2 show that the implicit flexibility of the hour-by-hour rule can be used for large benefit using the method of the present disclosure.

The examples shown above work well when the volatility frequency is smaller than the time after which energy is no longer categorized as green energy, e.g. one hour.

In the following some aspects allowing to address volatility on a larger time scale, e.g., a daily scale (like PV), which is difficult to address by, e.g., the above-described hour-by-hour regulation.

Electrical storage systems and/or hydrogen storage systems may be taken into account in determining the hydrogen setpoints. Storage capabilities of the plant in question may be taken into account for the modelling or optimization. Thus, as explained in detail above, excess green energy or excess green hydrogen may be stored so as to avoid loss of green energy due to the timing criteria or to reduce the burden on the optimization that would otherwise be required to reduce the loss. Thus, such an approach allows for mitigating volatility.

Alternatively or in addition, the present disclosure may employ exception-criteria to allow for exceptions from criteria that have to be met such that energy is categorized as green energy. Specifically, such an exception may allow for making use of grid power, which might otherwise not be considered green energy, by exceptionally categorizing it as green power. This allows for mitigating potential lack of renewable energy from volatile sources. This concept may be referred to as "green grid power".

Figure 8 illustrates a hydrogen production curve as obtained by an exemplary method according to the present disclosure (Example 3).

In this example, the above-described concept of categorizing power as green power is incorporated. Such power might be from a local supply or from the grid ("green grid power").

This may be done on addition to the steps illustrated in the context of Figures 6 and 7.

That is, even grid-supplied power coming from a mix of generators can be considered "green" under certain conditions. This may, for example, be derived from the measurable parameter of the power price. If the power price is below a certain limit (e.g. 20€/MWh), this implies a sufficient amount of green energy in the grid energy.

Figure 8 shows an example where power from such (surplus) times is used to minimize deviations from the production goal of 4. In terms of the determination, this additional green power can be added to the existing Pmax. There are 4 times when "green power" can be taken from the grid (grey line>0).

In the Figure, a benefit is visible compared to the previous examples, as the production around 11:00 is increased (and thus closer to the demand) and the duration of the gap around 23:00 is reduced by 15 minutes. The remaining production gap is also reduced. This was achieved in using the "green grid power" at 7:30 and 19:00 respectively.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for use in controlling operation of a hydrogen production plant, the method comprising
determining (S11) a maximum available amount of energy of a predetermined energy category in a current time interval;
determining (S12) a target minimum amount of the energy of the predetermined energy category to be used for hydrogen production in the current time interval; and
determining (S13) hydrogen setpoints for the current time interval using the maximum available amount and the target minimum amount as constraints.

2. The method of claim 1,
wherein categorization of energy into the predetermined energy category is based on one or more criteria comprising at least one of:
time criteria specifying a time period starting with or comprising a time of production of the energy, wherein the energy is only categorized as energy of the predetermined energy category if consumed within said time period and otherwise expires, particularly wherein consuming energy comprises producing hydrogen using the energy and or storing the energy for later use in producing hydrogen;
local criteria specifying a region, wherein the energy is only categorized as energy of the predetermined energy category if consumed within said region;
additivity criteria, wherein the energy is only categorized as energy of the predetermined energy category if its energy production facility was created for the purpose of hydrogen production,
and/or
wherein the energy of the predetermined energy category is green energy, pink energy, or a predetermined mix of energy types.

3. The method of claim 1 or 2, wherein categorization of energy as energy of the predetermined energy category is based on exception criteria, wherein exception criteria allowing for energy not meeting other mandatory criteria to exceptionally be categorized as energy of the predetermined energy category, particularly criteria taking into account an energy pr as an indicator for a renewable content of grid power.

4. The method of any of the preceding claims, wherein determining the hydrogen setpoints comprises using a model modelling hydrogen plant operation, the model taking into account (the) criteria for categorization of energy as energy of the predetermined energy category.

5. The method of any of the preceding claims, wherein determining the hydrogen setpoints comprises an optimization and/or a rule-based determination, respectively directed at achieving one or more primary goals and constrained by the maximum available amount and the target minimum amount.

6. The method of claim 5, wherein the primary goals include at least one of:
minimal hydrogen production volatility;
minimal production peaks;
minimal production schedule deviation;
minimal hydrogen storage requirements;
minimal energy storage requirements;
minimal degradation of one or more hydrogen plant components.

7. The method of any of the preceding claims, wherein determining the hydrogen setpoints comprises a prioritization of using older energy over using newer energy.

8. The method of any of the preceding claims, wherein the determination takes into account available hydrogen storage capacity and/or available energy storage capacity.

9. The method of any of the preceding claims,
wherein the maximum available energy of the predetermined energy category is determined for a current time slot and comprises left-over energy of the predetermined energy category from one or more preceding time slot and energy received energy of the predetermined energy category.

10. The method of any of the preceding claims, wherein the target minimum amount of energy of the predetermined energy category is determined to minimize expiration of energy of the predetermined energy category due to (the) time criteria specifying a/the time period starting with or comprising the time of production of the energy, wherein the energy is only categorized as energy of the predetermined energy category if consumed within said time period and otherwise expires.

11. The method of any of the preceding claims, wherein the method comprises tracking availability and upcoming expiry of energy of the predetermined energy category, particularly based on the criteria of claims 2 and/or 3, and taking into account the result of the tracking for determining the hydrogen setpoints.

12. The method of any of the preceding claims, the method comprising logging, for the operation of the hydrogen production plant, the use of energy of the predetermined energy category, particularly so as to allow for determining (the) one or more criteria on which categorization of energy as energy of the predetermined energy category was based.

13. A system (1) comprising a processing system (3) configured to carry out the method of any one of claims 1 to 12, in particular further comprising one or more electrolyzer modules (2) of an electrolyzer plant, the processing system configured to control operation of the one or more electrolyzer modules (2) to operate at the determined hydrogen setpoints, and optionally further comprising a hydrogen storage system and/or an energy storage system.

14. A computer-readable medium comprising instructions which, when executed by a computer, cause the computer to carry out the method of any one of claims 1 to 12.

15. A computer program product comprising instructions which, when the program is executed by a computer, cause the computer to carry out the method of any one of claims 1 to 12.
